# EUROPÄISCHE PATENTANMELDUNG

(11) **EP 4 549 140 A1**
(43) Veröffentlichungstag der Anmeldung: **07.05.2025**
(21) Anmeldenummer: 23207029.2
(22) Anmeldetag: 31.10.2023
(51) Int. Cl.: B32B 1/08, B32B 5/02, B32B 27/08, B32B 27/12, B32B 27/22, B32B 27/30, F16L 11/00

(54) **MEHRSCHICHTIGER FLEXIBLER SCHLAUCH**

(71) Anmelder: Schauenburg Hose Technology GmbH, 45478 Mülheim-Ruhr (DE)
(72) Erfinder: STEIGER, Johannes, 64289 Darmstadt (DE); SKOWRONEK, Roland, 47906 Kempen (DE)
(74) Vertreter: Andrejewski - Honke Patent- und Rechtsanwälte Partnerschaft mbB

(57) **Zusammenfassung**

Mehrschichtiger flexibler Schlauch zur Durchleitung zumindest eines fluiden Mediums, wobei der Schlauch einen Fluidkanal und eine den Fluidkanal umgebende Schlauchwandung aufweist. Die Schlauchwandung ist mehrschichtig aufgebaut und weist zumindest drei Schichten auf und zwar mit folgendem Schichtaufbau von innen nach außen: Es ist eine Innenschicht aus Polyvinylchlorid vorgesehen. Weiterhin ist eine Gewebeschicht und eine Außenschicht aus Polyvinylchlorid vorgesehen. Das Polyvinylchlorid der Innenschicht und/oder der Außenschicht weist zumindest einen Weichmacher auf Pflanzenbasis auf.

## Beschreibung

Die Erfindung betrifft einen mehrschichtigen flexiblen Schlauch, insbesondere einen Wasserschlauch, zur Durchleitung zumindest eines fluiden Mediums, insbesondere zur Durchleitung von Wasser, wobei der Schlauch einen Fluidkanal und eine den Fluidkanal umgebende Schlauchwandung aufweist, wobei die Schlauchwandung mehrschichtig aufgebaut ist und zumindest drei Schichten aufweist. Der erfindungsgemäße Schlauch wird besonders bevorzugt als Gartenschlauch eingesetzt. Dann wird insbesondere Wasser durch den Fluidkanal des Schlauches geführt. Es liegt aber auch im Rahmen der Erfindung, dass der erfindungsgemäße Schlauch als Wasserschlauch für andere Anwendungen - beispielsweise auf Baustellen - eingesetzt wird und grundsätzlich kann der erfindungsgemäße Schlauch auch zur Durchleitung anderer fluider Medien - beispielsweise zur Durchleitung von Gasen oder Aerosolen - eingesetzt werden.

Mehrschichtige flexible Schläuche, insbesondere Wasserschläuche, sind aus der Praxis in unterschiedlichen Ausführungsformen grundsätzlich bekannt. Als Material für die Schichten der Schlauchwandung dieser Schläuche werden üblicherweise Kunststoffe wie Polyvinylchlorid (PVC) eingesetzt. Diesen Kunststoffen sind in der Regel Weichmacher zugesetzt und die Weichmacher werden auf Basis von fossilen Rohstoffen wie Erdgas, Erdöl und dergleichen hergestellt. Wenn beispielsweise Polyvinylchlorid als Material für Schichten der Schlauchwandung flexibler Schläuche, beispielsweise von Wasserschläuchen, eingesetzt wird, sind dem Polyvinylchlorid üblicherweise in nicht unerheblichem Anteil Weichmacher auf Basis fossiler Rohstoffe zugesetzt. Dann handelt es sich um Weich-Polyvinylchlorid (Weich-PVC). Typische Weichmacherkomponenten auf Basis fossiler Rohstoffe in Weich-PVC sind etwa Diethylhexylterephthalat (DEHT), Dioctylphthalat (DOP), Dioctyladipat (DOA) oder Trioctylmellitat (TOTM). Grundsätzlich haben sich solche Weich-PVC-Materialien für flexible Schläuche und auch für Wasserschläuche bewährt. Es hat sich allerdings gezeigt, dass die mit den üblichen Kunststoffmaterialen bzw. PVC-Materialien hergestellten flexiblen Schläuche, insbesondere Wasserschläuche, nicht allen Anforderungen gerecht werden. Der Einsatz von Weichmachern auf Basis fossiler Rohstoffe ist in umwelttechnischer Hinsicht unvorteilhaft und insbesondere auch nur wenig nachhaltig. Darüber hinaus können die in den Kunststoffmaterialien verwendeten Weichmacher durch den Kontakt mit dem im Fluidkanal strömenden Fluid mit der Zeit ausgewaschen werden. Das kann bei Weichmachern auf Basis fossiler Rohstoffe sowohl aus umwelttechnischen Gesichtspunkten als auch in physiologischer Hinsicht nachteilhaft sein. Insgesamt ist es bei flexiblen Schläuchen, insbesondere bei Wasserschläuchen, gewünscht, dass die Nachhaltigkeit der verwendeten Materialien verbessert wird und dass die Schläuche nichtsdestoweniger allen Anforderungen im Hinblick auf ihre mechanischen Eigenschaften - beispielsweise ihre Flexibilität, ihre Auswaschbeständigkeit, ihre Beständigkeit gegenüber Schichtdelamination und dergleichen - genügen. Hier setzt die Erfindung ein.

Der Erfindung liegt demgegenüber das technische Problem zugrunde, einen mehrschichtigen flexiblen Schlauch der eingangs genannten Art anzugeben, bei dem die Nachhaltigkeit, insbesondere im Hinblick auf die verwendeten Materialien, verbessert wird und der nichtsdestoweniger hinsichtlich seiner mechanischen Eigenschaften allen Anforderungen genügt.

Zur Lösung dieses technischen Problems lehrt die Erfindung einen mehrschichtigen flexiblen Schlauch, insbesondere Wasserschlauch, zur Durchleitung zumindest eines fluiden Mediums, insbesondere zur Durchleitung von Wasser, wobei der Schlauch einen Fluidkanal und eine den Fluidkanal umgebende Schlauchwandung aufweist, wobei die Schlauchwandung mehrschichtig aufgebaut ist und zumindest drei Schichten mit folgendem Schichtaufbau von innen nach außen aufweist:
- Innenschicht aus Polyvinylchlorid
- Gewebeschicht
- Außenschicht aus Polyvinylchlorid,
wobei das Polyvinylchlorid der Innenschicht und/oder das Polyvinylchlorid der Außenschicht zumindest einen Weichmacher auf Pflanzenbasis aufweist.

Der erfindungsgemäße Schlauch wird bevorzugt als Wasserschlauch, besonders bevorzugt als Gartenschlauch verwendet. Durch den Schlauch bzw. durch den Fluidkanal des Schlauches wird ein fluides Medium, insbesondere Wasser, geführt. Es liegt aber auch im Rahmen der Erfindung, dass der erfindungsgemäße Schlauch als Wasserschlauch für andere Anwendungszwecke - etwa auf Baustellen - verwendet wird. Weiterhin liegt es im Rahmen der Erfindung, dass der erfindungsgemäße Schlauch zur Durchleitung anderer fluiden Medien - beispielsweise zur Durchleitung von Gasen oder Aerosolen - eingesetzt wird.

Mit dem Ausdruck Weichmacher auf Pflanzenbasis ist im Rahmen der Erfindung insbesondere ein Weichmacher gemeint, der auf Basis pflanzlicher bzw. nachwachsender Rohstoffe, vorzugsweise ausschließlich auf Basis pflanzlicher bzw. nachwachsender Rohstoffe, erzeugt ist. Weichmacher auf Pflanzenbasis meint somit im Rahmen der Erfindung insbesondere einen pflanzlichen Weichmacher. Zur Erzeugung des zumindest einen Weichmachers auf Pflanzenbasis werden somit im Rahmen der Erfindung insbesondere keine Rohstoffe auf fossiler Basis eingesetzt. Bei dem Polyvinylchlorid der Innenschicht und/oder dem Polyvinylchlorid der Außenschicht, das zumindest einen Weichmacher auf Pflanzenbasis enthält, handelt es sich bevorzugt um Weich-PVC.

Eine besonders bevorzugte Ausführungsform des erfindungsgemäßen Schlauches ist dadurch gekennzeichnet, dass der zumindest eine Weichmacher auf Pflanzenbasis zumindest ein pflanzlicher Ester, vorzugsweise ein Gemisch aus pflanzlichen Estern ist. Es hat sich bewährt, dass der zumindest eine Weichmacher auf Pflanzenbasis zumindest ein pflanzliches Triglycerid ist und bevorzugt eine Mischung aus pflanzlichen Triglyceriden ist. Ganz besonders bevorzugt ist der zumindest eine Weichmacher auf Pflanzenbasis zumindest ein Pflanzenöl und weiter bevorzugt ein Pflanzenölgemisch. Grundsätzlich liegen aber auch andere Weichmacher auf Pflanzenbasis im Rahmen der Erfindung.

Es ist besonders bevorzugt, dass das Polyvinylchlorid der Innenschicht und/oder das Polyvinylchlorid der Außenschicht zumindest einen Weichmacher auf Pflanzenbasis aufweist, wobei der zumindest eine Weichmacher auf Pflanzenbasis zumindest ein Pflanzenöl, besonders bevorzugt ein Pflanzenölgemisch, ist. Gemäß weiter bevorzugter Ausführungsform der Erfindung weist das Polyvinylchlorid der Innenschicht und das Polyvinylchlorid der Außenschicht zumindest einen Weichmacher auf Pflanzenbasis auf, wobei der zumindest eine Weichmacher auf Pflanzenbasis zumindest ein Pflanzenöl, besonders bevorzugt ein Pflanzenölgemisch, ist. Der Erfindung liegt in diesem Zusammenhang die Erkenntnis zugrunde, dass der Einsatz zumindest eines Weichmachers auf Pflanzenbasis für das Polyvinylchlorid der Innenschicht und/oder für das Polyvinylchlorid der Außenschicht im Vergleich zu den bekannten Maßnahmen erhebliche Vorteile mit sich bringt. Auf den Einsatz von Weichmachern auf Basis fossiler Rohstoffe für das Polyvinylchlorid der Innenschicht und/oder der Außenschicht kann dann vollständig verzichtet werden. Das ist umwelttechnisch und physiologisch, aber auch aus Nachhaltigkeitsgründen sehr vorteilhaft. Der resultierende mehrschichtige flexible Schlauch und insbesondere die PVC-Schichten des Schlauches, in denen zumindest ein Weichmacher auf Pflanzenbasis, insbesondere in Form zumindest eines Pflanzenöls, zum Einsatz kommt, zeichnet/zeichnen sich nichtsdestoweniger dadurch aus, dass die mechanischen Anforderungen unproblematisch erfüllt werden.

Es hat sich im Übrigen besonders bewährt, dass das Polyvinylchlorid der Innenschicht und/oder das Polyvinylchlorid der Außenschicht lediglich den zumindest einen Weichmacher auf Pflanzenbasis aufweist und somit insbesondere keinen Weichmacher auf Basis fossiler Rohstoffe aufweist. Zweckmäßigerweise weist die Innenschicht und/oder die Außenschicht lediglich einen Weichmacher auf Pflanzenbasis auf.

Es ist im Rahmen der Erfindung bevorzugt, dass die Innenschicht und/oder die Außenschicht aus dem - insbesondere zumindest einen Weichmacher auf Pflanzenbasis aufweisenden - Polyvinylchlorid besteht bzw. im Wesentlichen besteht. Wenn hier und nachfolgend in Bezug auf einen Kunststoff bzw. ein Material einer Schicht "im Wesentlichen besteht" angegeben wird, meint dies insbesondere, dass das Material - beispielsweise das zumindest einen Weichmacher auf Pflanzenbasis enthaltende Polyvinylchlorid - zu mindestens 93 Gew.-%, vorzugsweise zu mindestens 95 Gew.-% und bevorzugt zu mindestens 97 Gew.-%, beispielsweise zu mindestens 99 Gew.-%, vorhanden ist. Die restlichen Gew.-% können insbesondere von Additiven wie Füllstoffen, Verarbeitungshilfen, Farbstoffen, Pigmenten, Stabilisatoren und dergleichen gebildet werden.

Es ist etwa möglich, dass eine oder mehrere Schichten des Schlauches, insbesondere die Polyvinychlorid-basierten Schichten bzw. die Polyvinylchlorid-Schichten des Schlauches, beispielsweise die Innenschicht und/oder die Außenschicht, jeweils 1 Gew.-% bis 3 Gew.-% zumindest eines Stabilisators aufweist/aufweisen. Bei dem zumindest einen Stabilisator handelt es sich bevorzugt um Calciumstearat und/oder Zinkstearat. Es ist dann weiter bevorzugt, dass das Calciumstearat und/oder das Zinkstearat ohne den Einsatz tierischer Rohstoffe und/oder tierischer Zusatzstoffe erzeugt ist und vorzugsweise auf Basis pflanzlicher Rohstoffe erzeugt ist.

Gemäß bevorzugter Ausführungsform der Erfindung ist das Polyvinylchlorid der Innenschicht und/oder das Polyvinylchlorid der Außenschicht aus fossilen und/oder aus pflanzlichen bzw. nachwachsenden Rohstoffen erzeugt und ist insbesondere ohne den Einsatz tierischer Rohstoffe und/oder tierischer Zusatzstoffe erzeugt. Wenn das Polyvinylchlorid der Innenschicht und/oder das Polyvinylchlorid der Außenschicht ohne den Einsatz tierischer Rohstoffe und/oder tierischer Zusatzstoffe erzeugt ist, handelt es sich somit um veganes Polyvinylchlorid bzw. um vegan erzeugtes Polyvinylchlorid. Es liegt in diesem Zusammenhang auch im Rahmen der Erfindung, dass der erfindungsgemäße Schlauch vollständig ohne den Einsatz tierischer Rohstoffe und/oder tierischer Zusatzstoffe hergestellt ist. Dann handelt es sich zweckmäßigerweise um einen vollständig veganen bzw. vegan erzeugten Schlauch.

Es liegt im Rahmen der Erfindung, dass die Außenschicht die nach außen hin abschließende Schicht des Schlauches bzw. der Schlauchwandung ist. Es liegt außerdem im Rahmen der Erfindung, dass die Innenschicht die nach innen hin abschließende Schicht des Schlauches bzw. der Schlauchwandung ist.

Der erfindungsgemäße Schlauch weist zumindest eine Gewebeschicht, insbesondere eine Gewebeschicht, auf. Grundsätzlich liegt es auch im Rahmen der Erfindung, dass der erfindungsgemäße Schlauch zumindest zwei Gewebeschichten aufweist. Es ist bevorzugt, dass die zumindest eine Gewebeschicht auf Basis zumindest eines Polyesters, vorzugsweise auf Basis von Polyethylenterephthalat (PET) hergestellt ist und bevorzugt aus zumindest einem Polyester, besonders bevorzugt aus Polyethylenterephthalat (PET), besteht bzw. im Wesentlichen besteht. Es ist grundsätzlich auch möglich, dass die zumindest eine Gewebeschicht auf Basis von Polylactid (PLA) hergestellt ist und insbesondere aus Polylactid (PLA) besteht bzw. im Wesentlichen besteht.

Gemäß sehr bevorzugter Ausführungsform der Erfindung ist der zumindest eine Polyester der zumindest einen Gewebeschicht ein Polyester-Rezyklat und vorzugsweise ein Polyethylenterephthalat-Rezyklat (rPET). Dieser Ausführungsform liegt die Erkenntnis zugrunde, dass die Nachhaltigkeit des Schlauches durch diese Maßnahme weiter verbessert wird. Bevorzugt besteht die zumindest eine Gewebeschicht somit aus einem Polyethylenterephthalat-Rezyklat (rPET) bzw. besteht im Wesentlichen daraus.

Eine besonders bevorzugte Ausführungsform des erfindungsgemäßen mehrschichtigen flexiblen Schlauches ist dadurch gekennzeichnet, dass der Schlauch zumindest eine Barriereschicht - vorzugsweise aus Polyvinylchlorid - aufweist, die bevorzugt zwischen der Innenschicht und der Außenschicht, besonders bevorzugt zwischen der Innenschicht und der Gewebeschicht, angeordnet ist und die ganz besonders bevorzugt nach außen hin an die Innenschicht anschließt. Es liegt im Rahmen der Erfindung, dass die zumindest eine Barriereschicht aus Polyvinylchlorid, insbesondere aus zumindest einen Weichmacher aufweisendem Polyvinylchlorid, vorzugsweise aus zumindest einen Weichmacher auf Pflanzenbasis aufweisendem Polyvinylchlorid, besteht bzw. im Wesentlichen besteht. Wenn hier und nachfolgend davon die Rede ist, dass eine Schicht nach außen oder nach innen hin an eine andere Schicht anschließt, meint dies insbesondere, dass die betreffende Schicht unmittelbarohne die Zwischenschaltung weiterer Schichten - in Richtung der Schlauchaußenseite bzw. der Schlauchinnenseite an diese Schicht anschließt. Es ist bevorzugt, dass das Polyvinylchlorid der zumindest einen Barriereschicht aus fossilen und/oder aus pflanzlichen bzw. nachwachsenden Rohstoffen erzeugt ist und insbesondere ohne den Einsatz tierischer Rohstoffe und/oder tierischer Zusatzstoffe erzeugt ist.

Zweckmäßigerweise weist die Barriereschicht zumindest ein Barriereadditiv auf, das insbesondere als Barriere gegen Sonneneinstrahlung wirkt und wobei das Barriereadditiv vorzugsweise ein färbendes, bevorzugt ein schwarz färbendes, Barriereadditiv ist. Dieser Ausführungsform liegt die Erkenntnis zugrunde, dass durch ein färbendes bzw. schwarz färbendes Barriereadditiv eine gefärbte bzw. schwarz gefärbte Barriereschicht des erfindungsgemäßen mehrschichtigen flexiblen Schlauches erzeugt wird, die insbesondere als Barriere gegen Sonneneinstrahlung wirkt. Dadurch wird bevorzugt eine Algenbildung im Inneren des Schlauches sehr funktionssicher vermieden.

Es ist bevorzugt, dass der erfindungsgemäße Schlauch zumindest eine Verstärkungsschicht - vorzugsweise aus Polyvinylchlorid - aufweist, die bevorzugt zwischen der Innenschicht und der Außenschicht, besonders bevorzugt zwischen der Innenschicht und der Gewebeschicht, angeordnet ist und die ganz besonders bevorzugt nach innen hin an die Gewebeschicht und/oder nach außen hin an die Barriereschicht anschließt. Es ist weiter bevorzugt, dass die zumindest eine Verstärkungsschicht aus Polyvinylchlorid, insbesondere aus zumindest einen Weichmacher aufweisendem Polyvinylchlorid, vorzugsweise aus zumindest einen Weichmacher auf Pflanzenbasis aufweisendem Polyvinylchlorid, besteht bzw. im Wesentlichen besteht. Zweckmäßigerweise ist das Polyvinylchlorid der zumindest einen Verstärkungsschicht aus fossilen und/oder aus pflanzlichen bzw. nachwachsenden Rohstoffen erzeugt und ist insbesondere ohne den Einsatz tierischer Rohstoffe und/oder tierischer Zusatzstoffe erzeugt. Die zumindest eine Verstärkungsschicht trägt in Zusammenwirkung mit den übrigen Schichten des Schlauches insbesondere zur verbesserten Stabilität und mechanischen Beständigkeit des Schlauches bei.

Es liegt im Rahmen der Erfindung, dass das Polyvinylchlorid der Barriereschicht und/oder das Polyvinylchlorid der Verstärkungsschicht zumindest einen Weichmacher auf Pflanzenbasis aufweist und dass bevorzugt alle Polyvinylchlorid-basierten Schichten bzw. Polyvinylchlorid-Schichten des Schlauches zumindest einen Weichmacher auf Pflanzenbasis aufweisen. Bei dem zumindest einen Weichmacher auf Pflanzenbasis handelt es sich vorzugsweise um zumindest einen pflanzlichen Ester, bevorzugt um ein Gemisch aus pflanzlichen Estern und besonders bevorzugt um zumindest ein Pflanzenöl, ganz besonders bevorzugt um ein Pflanzenölgemisch. Gemäß sehr bevorzugter Ausführungsform der Erfindung weisen alle Polyvinylchlorid-basierten Schichten bzw. Polyvinylchlorid-Schichten des Schlauches zumindest einen Weichmacher auf Pflanzenbasis in Form zumindest eines Pflanzenöls, insbesondere in Form eines Pflanzenölgemisches, auf. In diesem Zusammenhang hat es sich besonders bewährt, dass alle Polyvinylchlorid-basierten Schichten bzw. Polyvinylchlorid-Schichten des Schlauches lediglich den zumindest einen Weichmacher auf Pflanzenbasis als Weichmacher aufweisen und bevorzugt lediglich zumindest ein Pflanzenöl, besonders bevorzugt ein Pflanzenölgemisch, als Weichmacher aufweisen. Bevorzugt weist somit keine der Polyvinylchlorid-basierten Schichten bzw. Polyvinylchlorid-Schichten des Schlauches einen Weichmacher auf Basis fossiler Rohstoffe auf.

Diese Ausführungsform, bei der alle Polyvinylchlorid-basierten Schichten bzw. Polyvinylchlorid-Schichten des Schlauches zumindest einen Weichmacher auf Pflanzenbasis, insbesondere lediglich zumindest einen Weichmacher auf Pflanzenbasis, in Form zumindest eines Pflanzenöls, bevorzugt in Form eines Pflanzenölgemisches, aufweisen, hat sich im Rahmen der Erfindung ganz besonders bewährt. Ein entsprechender Schlauch ist in umwelttechnischer und physiologischer Hinsicht sehr vorteilhaft und erfüllt sowohl die Anforderungen an die Nachhaltigkeit als auch alle Anforderungen hinsichtlich seiner mechanischen Eigenschaften.

Es liegt im Rahmen der Erfindung, dass es sich bei dem Polyvinylchlorid der Innenschicht und/oder bei dem Polyvinylchlorid der Außenschicht und/oder bei dem Polyvinylchlorid der Barriereschicht und/oder bei dem Polyvinylchlorid der Verstärkungsschicht - insbesondere bei dem Polyvinylchlorid aller Polyvinylchlorid-basierten Schichten bzw. Polyvinylchlorid-Schichten des Schlauches -, das zumindest einen Weichmacher auf Pflanzenbasis aufweist, um Weich-PVC handelt. Es ist weiter bevorzugt, dass das Polyvinylchlorid der Innenschicht und/oder das Polyvinylchlorid der Außenschicht und/oder das Polyvinylchlorid der Barriereschicht und/oder das Polyvinylchlorid der Verstärkungsschicht - insbesondere das Polyvinylchlorid aller Polyvinylchlorid-basierten Schichten bzw. Polyvinylchlorid-Schichten des Schlauches - eine Härte Shore A, insbesondere nach DIN EN ISO 868, von 50 bis 90, vorzugsweise von 60 bis 80, bevorzugt von 65 bis 80, aufweist.

Gemäß einer bevorzugten Ausführungsform der Erfindung ist das Polyvinylchlorid der Innenschicht und/oder das Polyvinylchlorid der Außenschicht und/oder das Polyvinylchlorid der Barriereschicht und/oder das Polyvinylchlorid der Verstärkungsschicht zumindest teilweise, vorzugsweise vollständig bzw. im Wesentlichen vollständig, aus pflanzlichen bzw. nachwachsenden Rohstoffen, insbesondere unter Einsatz von Tallöl und/oder Palmöl, erzeugt. Bevorzugt ist das Polyvinylchlorid aller Polyvinylchlorid-basierten Schichten bzw. Polyvinylchlorid-Schichten des Schlauches zumindest teilweise, vorzugsweise vollständig bzw. im Wesentlichen vollständig, aus pflanzlichen bzw. nachwachsenden Rohstoffen, insbesondere unter Einsatz von Tallöl und/oder Palmöl, erzeugt. Wenn das Polyvinylchlorid zumindest einer Schicht des erfindungsgemäßen Schlauches, insbesondere aller Polyvinylchlorid-Schichten des erfindungsgemäßen Schlauches, zumindest teilweise, vorzugsweise vollständig bzw. im Wesentlichen vollständig, aus pflanzlichen bzw. nachwachsenden Rohstoffen erzeugt ist, kann dadurch die Nachhaltigkeit des erfindungsgemäßen mehrschichtigen flexiblen Schlauches weiter verbessert werden. Bei einer solchen Ausführungsform kann zumindest teilweise, vorzugsweise vollständig bzw. im Wesentlichen vollständig auf fossile Rohstoffe für die Erzeugung des Polyvinylchlorids zumindest einer Schicht, vorzugsweise aller Polyvinylchlorid-Schichten der des Schlauches, verzichtet werden.

Es liegt im Rahmen der Erfindung, dass die zumindest eine Gewebeschicht um die nach innen hin an die Gewebeschicht anschließende Schicht, vorzugsweise um die Innenschicht und/oder um die Barriereschicht und/oder um die Verstärkungsschicht, herum angeordnet ist, bevorzugt gewickelt ist, wobei die Gewebeschicht besonders bevorzugt als nicht-verknüpfte Gewebeschicht, insbesondere als Kreuzgewebe, und/oder als verknüpfte Gewebeschicht ausgebildet ist. Wenn die zumindest eine Gewebeschicht als verknüpfte Gewebeschicht ausgebildet ist, liegt es im Rahmen der Erfindung, dass die Gewebeschicht als Trikotgewebe und/oder als spiralisiertes Trikotgewebe ausgestaltet ist. Wenn die zumindest eine Gewebeschicht als verknüpfte Gewebeschicht ausgebildet ist, ist es gemäß alternativer Ausführungsform besonders bevorzugt, dass die Gewebeschicht zumindest zwei Garnspiralen, insbesondere zumindest zwei Serien von Garnspiralen, aufweist, die zur Bildung von Gewebemaschen miteinander verknüpft sind. Durch die zumindest eine Gewebeschicht des erfindungsgemäßen Schlauches wird ein Verknicken und/oder Verknoten des Schlauches effektiv und funktionssicher vermieden. Die erfindungsgemäße zumindest eine Gewebeschicht gibt insbesondere eine Schlauchverdrehung über die Schlauchlänge hinweg funktionssicher weiter, so dass sich der Schlauch aufgrund der Gewebestruktur, insbesondere der verknüpften Gewebestruktur, vorzugsweise gleichsam selbsttätig von einer Verdrehung befreit.

Gemäß sehr bevorzugter Ausführungsform der Erfindung schließt die zumindest eine Gewebeschicht nach innen hin an die Außenschicht an. Es ist im Rahmen der Erfindung bevorzugt, dass die Außenschicht zumindest bereichsweise bzw. abschnittsweise transparent ausgebildet ist, so dass die zumindest eine Gewebeschicht bevorzugt durch die transparenten Bereiche bzw. Abschnitte der Außenschicht hindurch sichtbar ist. Dieser Ausführungsform liegt die Erkenntnis zugrunde, dass die Gewebeschicht dann für den Benutzer von der Außenseite des Schlauches aus zu erkennen ist und dass sich der Benutzer von der Funktionsweise und auch von der Intaktheit der Gewebeschicht überzeugen kann. Es liegt im Rahmen der Erfindung, dass die Außenschicht einen sich in Längsrichtung des Schlauches erstreckenden, transparenten Streifen aufweist. Es ist grundsätzlich aber auch möglich, dass die Außenschicht überwiegend transparent ausgebildet ist und lediglich einen sich in Längsrichtung des Schlauches erstreckenden nicht-transparenten Streifen aufweist, auf dem insbesondere Produktbezeichnungen und dergleichen aufgedruckt sein können. Grundsätzlich liegt es aber auch im Rahmen der Erfindung, dass die Außenschicht vollständig bzw. im Wesentlichen vollständig transparent ausgebildet ist.

Es ist sehr bevorzugt, dass die Gesamtschichtdicke d der Schlauchwandung des Schlauches 1,0 mm bis 6,0 mm, bevorzugt 1,5 mm bis 5,5 mm, besonders bevorzugt 1,8 mm bis 4,5 mm und ganz besonders bevorzugt 2,0 mm bis 4,0 mm beträgt.

Es liegt im Rahmen der Erfindung, dass die nach innen hin an die Gewebeschicht anschließenden Schichten des Schlauches zusammen eine größere Schichtdicke aufweisen als die nach außen hin an die Gewebeschicht anschließenden Schichten und wobei das Verhältnis der Schichtdickensumme der nach innen hin an die Gewebeschicht anschließenden Schichten zu der nach außen hin an die Gewebeschicht anschließenden Schichten vorzugsweise 80:20 bis 51:49, bevorzugt 75:25 bis 55:45, besonders bevorzugt 70:30 bis 60:40, beträgt. Nach innen hin an die Gewebeschicht anschließende Schichten meint in diesem Zusammenhang insbesondere die Gesamtheit der nach innen hin an die Gewebeschicht anschließenden Schichten, also zweckmäßigerweise die unmittelbar nach innen hin an die Gewebeschicht anschließende Schicht und die daran wieder unmittelbar nach innen hin anschließende Schicht und so weiter. Nach außen hin an die Gewebeschicht anschließenden Schichten meint in diesem Zusammenhang insbesondere die Gesamtheit der nach außen hin an die Gewebeschicht anschließenden Schichten, also insbesondere die unmittelbar nach außen hin an die Gewebeschicht anschließende Schicht und die daran wieder unmittelbar nach außen hin anschließende Schicht und so weiter. Grundsätzlich liegt es auch im Rahmen der Erfindung, dass die nach innen hin an die Gewebeschicht anschließenden Schichten des Schlauches zusammen eine geringere Schichtdicke aufweisen als die nach außen hin an die Gewebeschicht anschließenden Schichten.

Es hat sich bewährt, dass die Innenschicht und/oder die Außenschicht und/oder die Verstärkungsschicht jeweils eine größere Schichtdicke aufweist/aufweisen als die Barriereschicht. Gemäß einer bevorzugten Ausführungsform der Erfindung weist die Barriereschicht eine Schichtdicke von 0,05 mm bis 1,0 mm, vorzugsweise von 0,1 mm bis 0,5 mm, bevorzugt von 0,15 mm bis 0,3 mm, sehr bevorzugt von 0,18 mm bis 0,25 mm auf. Es ist bevorzugt, dass die Innenschicht und/oder die Außenschicht und/oder die Verstärkungsschicht jeweils eine Schichtdicke von 0,05 mm bis 3,0 mm, vorzugsweise von 0,1 mm bis 2,5 mm, bevorzugt von 0,15 mm bis 2,0 mm aufweisen. Es liegt im Rahmen der Erfindung, dass die zumindest eine Gewebeschicht eine Schichtdicke von 0,1 mm bis 1,5 mm, vorzugsweise von 0,15 mm bis 1,25 mm, bevorzugt von 0,2 mm bis 1,0 mm aufweist.

Es ist im Rahmen der Erfindung bevorzugt, dass die Innenschicht und/oder die Außenschicht und/oder die Barriereschicht und/oder die Verstärkungsschicht jeweils einen Anteil des zumindest einen Weichmachers auf Pflanzenbasis von 10 Gew.-% bis 50 Gew.-%, vorzugsweise von 15 Gew.-% bis 45 Gew.-%, bevorzugt von 20 Gew.-% bis 40 Gew.-% aufweisen. Zweckmäßigerweise besteht bzw. bestehen die Innenschicht und/oder die Außenschicht und/oder die Barriereschicht und/oder die Verstärkungsschicht jeweils aus Polyvinylchlorid mit dem vorstehend angegebenen Anteil zumindest eines Weichmachers auf Pflanzenbasis bzw. bestehen im Wesentlichen daraus. Es ist bevorzugt, dass alle Polyvinylchlorid-basierten Schichten bzw. Polyvinylchlorid-Schichten des erfindungsgemäßen Schlauches jeweils einen Anteil des zumindest einen Weichmachers auf Pflanzenbasis von 10 Gew.-% bis 50 Gew.-%, vorzugsweise von 15 Gew.-% bis 45 Gew.-%, bevorzugt von 20 Gew.-% bis 40 Gew.-% aufweisen. Der Anteil des zumindest einen Weichmachers auf Pflanzenbasis in den Schichten kann gemäß einer Ausführungsform der Erfindung mittels der Radiocarbonmethode ermittelt werden.

Es liegt im Rahmen der Erfindung, dass der erfindungsgemäße Schlauch durch Extrusion bzw. Koextrusion der Polyvinylchlorid-Schichten mit zwischengeschalteter Aufbringung, insbesondere Wicklung, der zumindest einen Gewebeschicht, hergestellt wird.

Gemäß besonders bevorzugter Ausführungsform der Erfindung weist der erfindungsgemäße Schlauch zumindest fünf Schichten, vorzugsweise genau fünf Schichten auf und zwar mit der Schichtabfolge von innen nach außen: Innenschicht aus Polyvinylchlorid, wobei das Polyvinylchlorid der Innenschicht zumindest einen Weichmacher auf Pflanzenbasis aufweist / Barriereschicht aus Polyvinylchlorid, wobei die Barriereschicht zumindest ein färbendes, bevorzugt ein schwarz färbendes, Barriereadditiv aufweist und wobei das Polyvinylchlorid der Barriereschicht zumindest einen Weichmacher auf Pflanzenbasis aufweist / Verstärkungsschicht aus Polyvinylchlorid, wobei das Polyvinylchlorid der Verstärkungsschicht zumindest einen Weichmacher auf Pflanzenbasis aufweist / Gewebeschicht auf Basis zumindest eines Polyesters, vorzugsweise auf Basis von Polyethylenterephthalat, besonders bevorzugt auf Basis eines Polyethylenterephthalat-Rezyklats / Außenschicht aus Polyvinylchlorid, wobei das Polyvinylchlorid der Außenschicht zumindest einen Weichmacher auf Pflanzenbasis aufweist.

Bei dem zumindest einen Weichmacher auf Pflanzenbasis der vorstehend genannten Polyvinylchlorid-Schichten handelt es sich bevorzugt um zumindest ein Pflanzenöl, besonders bevorzugt um ein Pflanzenölgemisch. Zweckmäßigerweise bestehen die Polyvinylchlorid-Schichten der vorstehend beschriebenen bevorzugten Ausführungsform aus dem - zumindest einen Weichmacher auf Pflanzenbasis aufweisenden - Polyvinylchlorid bzw. bestehen im Wesentlichen daraus. Weiter bevorzugt besteht die Gewebeschicht der vorstehend beschriebenen Ausführungsform des erfindungsgemäßen Schlauches aus Polyethylenterephthalat bzw. besteht im Wesentlichen aus Polyethylenterephthalat und bevorzugt aus einem Polyethylenterephthalat-Rezyklat. Es ist außerdem bevorzugt, dass das Polyvinylchlorid aller Polyvinylchlorid-Schichten der vorstehend beschriebenen bevorzugten Ausführungsform zumindest teilweise, vorzugsweise vollständig bzw. im Wesentlichen vollständig, aus pflanzlichen bzw. nachwachsenden Rohstoffen, insbesondere unter Einsatz von Tallöl und/oder Palmöl, erzeugt ist.

Es liegt im Rahmen der Erfindung, dass der Schlauch mehr als fünf Schichten, beispielsweise zumindest sechs oder zumindest sieben oder zumindest acht Schichten aufweist. Es ist beispielsweise möglich, dass zwischen der Gewebeschicht und der Außenschicht eine Zwischenschicht angeordnet ist und es ist insbesondere auch möglich, dass zwischen dieser Zwischenschicht und der Außenschicht eine weitere Gewebeschicht vorgesehen ist. Die Zwischenschicht kann aus Polyvinylchlorid, das zumindest einen Weichmacher auf Pflanzenbasis aufweist, bestehen bzw. im Wesentlichen bestehen.

Der Erfindung liegt die Erkenntnis zugrunde, dass der erfindungsgemäße mehrschichtige flexible Schlauch sich aufgrund des Einsatzes von zumindest einem Weichmacher auf Pflanzenbasis durch eine im Vergleich zu den bekannten Maßnahmen deutlich verbesserte Nachhaltigkeit und außerdem in umwelttechnischer und physiologischer Hinsicht verbesserte Unbedenklichkeit auszeichnet. Die Verwendung zumindest eines Weichmachers auf Pflanzenbasis für zumindest eine, vorzugsweise für zumindest zwei und besonders bevorzugt für alle Polyvinylchlorid-basierten Schichten bzw. Polyvinylchlorid-Schichten des Schlauches führt dazu, dass Weichmacher aus fossilen Rohstoffen vermieden werden können, insbesondere vollständig vermieden werden können. Das verbessert die Nachhaltigkeit und die Unbedenklichkeit in umwelttechnischer und physiologischer Hinsicht des erfindungsgemäßen Schlauches beachtlich. Das gilt in ganz besonderem Maße für die Verwendung zumindest eines Pflanzenöls, insbesondere eines Pflanzenölgemisches als Weichmacher auf Pflanzenbasis. Nichtsdestoweniger erfüllt der erfindungsgemäße mehrschichtige flexible Schlauch alle Anforderungen im Hinblick auf die mechanischen Eigenschaften. Es ist außerdem zu betonen, dass die erfindungsgemäßen Maßnahmen verhältnismäßig wenig aufwändig und dennoch sehr funktionssicher sind und dass sich der erfindungsgemäße Schlauch somit auch durch eine hohe Wirtschaftlichkeit auszeichnet. Der erfindungsgemäße Schlauch erfüllt somit bezüglich der mechanischen Eigenschaften alle Anforderungen und kann mit verbesserter Nachhaltigkeit, Umweltfreundlichkeit und physiologischer Unbedenklichkeit hergestellt werden. Der erfindungsgemäße Schlauch kann darüber hinaus mit geringem Fertigungsaufwand und somit mit geringen Fertigungskosten hergestellt werden.

Nachfolgend wird die Erfindung anhand einer lediglich ein Ausführungsbeispiel darstellenden Zeichnung näher erläutert. Es zeigen in schematischer Darstellung:

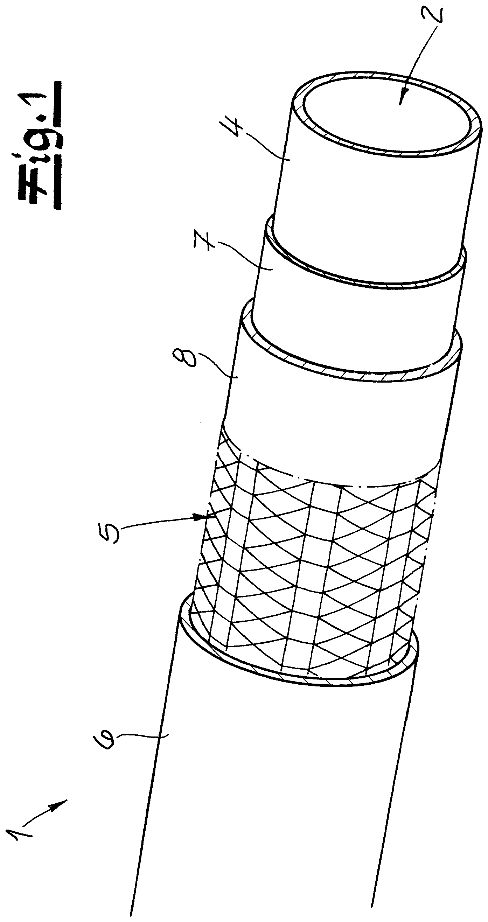

- Fig. 1: eine perspektivische Ansicht eines erfindungsgemäßen mehrschichtigen flexiblen Schlauches und
- Fig. 2: einen Schnitt durch den Gegenstand nach Fig. 1.

Die Figuren zeigen einen erfindungsgemäßen mehrschichtigen flexiblen Schlauch 1. Im Ausführungsbeispiel gemäß den Figuren handelt es sich bei dem Schlauch 1 um einen Wasserschlauch und insbesondere um einen Gartenschlauch. Der Schlauch 1 weist einen Fluidkanal 2 und eine den Fluidkanal 2 umgebende Schlauchwandung 3 auf. Durch den Schlauch 1 wird in dem Fluidkanal 2 ein fluides Medium, vorzugsweise Wasser, geführt bzw. durchgeleitet. Das fluide Medium ist in den Figuren nicht näher dargestellt. Gemäß bevorzugter Ausführungsform der Erfindung und im Ausführungsbeispiel weist die Schlauchwandung 3 fünf Schichten auf. Bei diesen fünf Schichten handelt es sich von innen nach außen um eine Innenschicht 4, eine Barriereschicht 7, eine Verstärkungsschicht 8, eine Gewebeschicht 5 und eine Außenschicht 6. Die Innenschicht 4 bildet zweckmäßigerweise und im Ausführungsbeispiel die nach innen hin abschließende Schicht des Schlauches 1 bzw. der Schlauchwandung 3 und steht insbesondere in Kontakt zu dem in dem Fluidkanal 2 geführten Fluid.

Zweckmäßigerweise und im Ausführungsbeispiel besteht die Innenschicht 4 im Wesentlichen aus Polyvinylchlorid, das einen Weichmacher auf Pflanzenbasis aufweist. Bevorzugt und im Ausführungsbeispiel besteht die Innenschicht 4 zu mindestens 95 Gew.-% aus dem - einen Weichmacher auf Pflanzenbasis aufweisenden - Polyvinylchlorid. Weiter bevorzugt und im Ausführungsbeispiel enthält die Innenschicht 4 einen Anteil des Weichmachers auf Pflanzenbasis von 20 Gew.-% bis 40 Gew.-%. Zweckmäßigerweise und im Ausführungsbeispiel ist der Weichmacher auf Pflanzenbasis ein Pflanzenölgemisch.

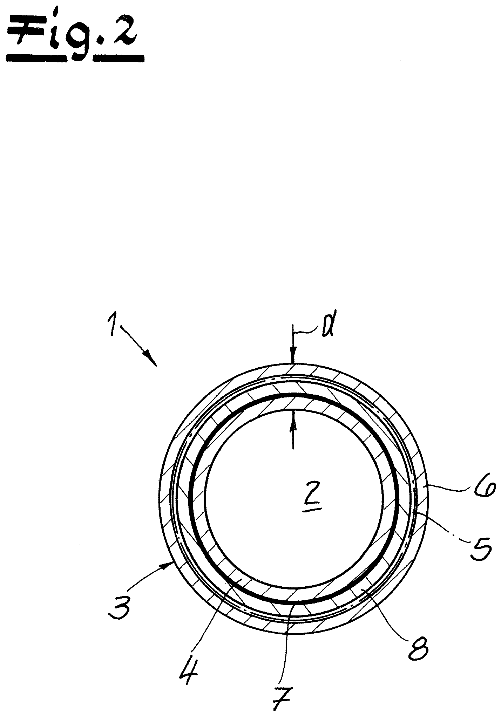

Im Ausführungsbeispiel gemäß den Figuren und bevorzugt schließt an die Innenschicht 4 nach außen hin die Barriereschicht 7 an. Die Barriereschicht 7 besteht vorzugsweise im Wesentlichen aus Polyvinylchlorid, das einen Weichmacher auf Pflanzenbasis aufweist. Bevorzugt und im Ausführungsbeispiel besteht die Barriereschicht 7 zu mindestens 95 Gew.-% aus dem - einen Weichmacher auf Pflanzenbasis aufweisenden - Polyvinylchlorid. Besonders bevorzugt handelt es sich bei dem Weichmacher auf Pflanzenbasis um ein Pflanzenölgemisch. Bewährtermaßen und im Ausführungsbeispiel enthält die Barriereschicht 7 einen Anteil des Weichmachers auf Pflanzenbasis von 20 Gew.-% bis 40 Gew.-%. Sehr bevorzugt und im Ausführungsbeispiel gemäß den Figuren weist die Barriereschicht 7 außerdem ein schwarz färbendes Barriereadditiv auf. Das ist in der Fig. 2 zu erkennen. Das schwarz färbende Barriereadditiv färbt die Barriereschicht 7 schwarz und wirkt insbesondere als Barriere gegen Sonneneinstrahlung. Dadurch wird bevorzugt eine Algenbildung im Inneren des Schlauches 1 verhindert. Weiter bevorzugt und im Ausführungsbeispiel weisen im Übrigen die Innenschicht 4 und die Außenschicht 6 und die Verstärkungsschicht 8 jeweils eine größere Schichtdicke auf als die Barriereschicht 7.

Empfohlenermaßen und im Ausführungsbeispiel schließt an die Barriereschicht 7 nach außen hin die Verstärkungsschicht 8 an. Die Verstärkungsschicht 8 besteht vorzugsweise und im Ausführungsbeispiel im Wesentlichen aus Polyvinylchlorid, das einen Weichmacher auf Pflanzenbasis aufweist. Sehr bevorzugt besteht die Verstärkungsschicht 8 zu mindestens 95 Gew.-% aus dem - einen Weichmacher auf Pflanzenbasis aufweisenden - Polyvinylchlorid. Bei dem Weichmacher auf Pflanzenbasis handelt es sich empfohlenermaßen und im Ausführungsbeispiel um ein Pflanzenölgemisch. Zweckmäßigerweise enthält die Verstärkungsschicht 8 einen Anteil des Weichmachers auf Pflanzenbasis von 20 Gew.-% bis 40 Gew.-%. Die Verstärkungsschicht 8 dient insbesondere zur Verstärkung der Schlauchwandung 3 bzw. des Schlauches 1 und bevorzugt zur Verbesserung der mechanischen Stabilität.

Erfindungsgemäß ist eine Gewebeschicht 5 vorgesehen, die bevorzugt und im Ausführungsbeispiel nach außen hin an die Verstärkungsschicht 8 und nach innen hin an die Außenschicht 6 anschließt. Es ist weiter bevorzugt, dass die Gewebeschicht 5 aus Polyethylenterephthalat besteht bzw. im Wesentlichen besteht. Im Ausführungsbeispiel gemäß den Figuren mag die Gewebeschicht aus einem Polyethylenterephthalat-Rezyklat bestehen bzw. im Wesentlichen bestehen. Zweckmäßigerweise und im Ausführungsbeispiel ist die Gewebeschicht 5 um die Verstärkungsschicht 8 gewickelt und sehr bevorzugt als verknüpfte Gewebeschicht 5 ausgebildet. Besonders bevorzugt und im Ausführungsbeispiel weist die Gewebeschicht 5 zumindest zwei Serien von Garnspiralen auf, die zur Bildung von Gewebemaschen miteinander verknüpft sind.

Nach außen hin an die Gewebeschicht 5 schließt zweckmäßigerweise und im Ausführungsbeispiel gemäß den Figuren die Außenschicht 6 an. Die Außenschicht 6 besteht empfohlenermaßen im Wesentlichen aus Polyvinylchlorid, das einen Weichmacher auf Pflanzenbasis aufweist. Im Ausführungsbeispiel gemäß den Figuren und gemäß bevorzugter Ausführungsform besteht die Außenschicht 6 zu mindestens 95 Gew.-% aus dem - einen Weichmacher auf Pflanzenbasis aufweisenden - Polyvinylchlorid. Bei dem Weichmacher auf Pflanzenbasis handelt es sich empfohlenermaßen und im Ausführungsbeispiel um ein Pflanzenölgemisch. Weiter bevorzugt und im Ausführungsbeispiel enthält die Außenschicht 6 einen Anteil des Weichmachers auf Pflanzenbasis von 20 Gew.-% bis 40 Gew.-%.

Gemäß besonders bevorzugter Ausführungsform der Erfindung und im Ausführungsbeispiel ist der Schlauch 1 bzw. sind die Materialien der Schlauchwandung 3 ohne den Einsatz tierischer Rohstoffe und/oder tierischer Zusatzstoffe erzeugt, so dass es sich um einen veganen Schlauch 1 bzw. um einen vegan hergestellten Schlauch 1 handelt. Weiter bevorzugt und im Ausführungsbeispiel weisen die Polyvinylchlorid-Schichten des Schlauches 1 - also die Innenschicht 4, die Barriereschicht 7, die Verstärkungsschicht 8 und die Außenschicht 6 - einen Weichmacher auf Pflanzenbasis auf und bei diesem Weichmacher handelt es sich gemäß ganz besonders bevorzugter Ausführungsform um ein Pflanzenölgemisch. Gemäß alternativer bevorzugter Ausführungsform handelt es sich bei dem Weichmacher auf Pflanzenbasis um ein einzelnes Pflanzenöl. Zweckmäßigerweise und im Ausführungsbeispiel weisen die Polyvinylchlorid-basierten Schichten bzw. Polyvinylchlorid-Schichten des Schlauches 1 bzw. der Schlauchwandung 3 lediglich den Weichmacher auf Pflanzenbasis bzw. lediglich das Pflanzenöl oder Pflanzenölgemisch als Weichmacher auf. Gemäß sehr bevorzugter Ausführungsform des erfindungsgemäßen Schlauches 1 und im Ausführungsbeispiel enthalten die Innenschicht 4 und die Außenschicht 6 und die Barriereschicht 7 und die Verstärkungsschicht 8 jeweils einen Anteil des Weichmachers auf Pflanzenbasis von 20 Gew.-% bis 40 Gew.-%.

Sehr bevorzugt und im Ausführungsbeispiel gemäß den Figuren ist das Polyvinylchlorid aller Polyvinylchlorid-basierten Schichten bzw. Polyvinylchlorid-Schichten des Schlauches 1 - also der Innenschicht 4, der Barriereschicht 7, der Verstärkungsschicht 8 und der Außenschicht 6 - zumindest teilweise, vorzugsweise vollständig bzw. im Wesentlichen vollständig, aus pflanzlichen bzw. nachwachsenden Rohstoffen, insbesondere unter Einsatz von Tallöl und/oder Palmöl, erzeugt.

Die Gesamtschichtdicke d der Schlauchwandung 3 des Schlauches 1 beträgt zweckmäßigerweise 1,0 mm bis 6,0 mm, bevorzugt 1,5 mm bis 5,5 mm und besonders bevorzugt 1,8 mm bis 4,5 mm.

Es hat sich bewährt, dass die nach innen hin an die Gewebeschicht 5 anschließenden Schichten des Schlauches 1 - also bevorzugt und im Ausführungsbeispiel die Verstärkungsschicht 8, die Barriereschicht 7 und die Innenschicht 4 - zusammen eine größere Schichtdicke aufweisen als die nach außen hin an die Gewebeschicht 5 anschließenden Schichten - also bevorzugt und im Ausführungsbeispiel die Außenschicht 6. Zweckmäßigerweise und im Ausführungsbeispiel beträgt das Verhältnis der Schichtdickensumme der nach innen hin an die Gewebeschicht 5 anschließenden Schichten zu der Schichtdickensumme der nach außen hin an die Gewebeschicht 5 anschließenden Schichten 75:25 bis 55:45. Dabei wird die Schichtdicke der Gewebeschicht 5 insbesondere zu keiner der Schichtdickensummen hinzugezählt.

## Patentansprüche

1. Mehrschichtiger flexibler Schlauch (1), insbesondere Wasserschlauch, zur Durchleitung zumindest eines fluiden Mediums, insbesondere zur Durchleitung von Wasser, wobei der Schlauch (1) einen Fluidkanal (2) und eine den Fluidkanal (2) umgebende Schlauchwandung (3) aufweist, wobei die Schlauchwandung (3) mehrschichtig aufgebaut ist und zumindest drei Schichten mit folgendem Schichtaufbau von innen nach außen aufweist:
- Innenschicht (4) aus Polyvinylchlorid
- Gewebeschicht (5)
- Außenschicht (6) aus Polyvinylchlorid,
wobei das Polyvinylchlorid der Innenschicht (4) und/oder das Polyvinylchlorid der Außenschicht (5) zumindest einen Weichmacher auf Pflanzenbasis aufweist.

2. Schlauch nach Anspruch 1, wobei der zumindest eine Weichmacher auf Pflanzenbasis zumindest ein pflanzlicher Ester, vorzugsweise ein Gemisch aus pflanzlichen Estern, ist und bevorzugt zumindest ein Pflanzenöl, besonders bevorzugt ein Pflanzenölgemisch, ist.

3. Schlauch nach einem der Ansprüche 1 oder 2, wobei das Polyvinylchlorid der Innenschicht (4) und/oder das Polyvinylchlorid der Außenschicht (6) aus fossilen und/oder aus pflanzlichen bzw. nachwachsenden Rohstoffen erzeugt ist und insbesondere ohne den Einsatz tierischer Rohstoffe und/oder tierischer Zusatzstoffe erzeugt ist.

4. Schlauch nach einem der Ansprüche 1 bis 3, wobei die zumindest eine Gewebeschicht (5) auf Basis zumindest eines Polyesters, vorzugsweise auf Basis von Polyethylenterephthalat, hergestellt ist und bevorzugt aus zumindest einem Polyester, besonders bevorzugt aus Polyethylenterephthalat, besteht bzw. im Wesentlichen besteht.

5. Schlauch nach Anspruch 4, wobei der zumindest eine Polyester der zumindest einen Gewebeschicht (5) ein Polyester-Rezyklat ist und vorzugsweise ein Polyethylenterephthalat-Rezyklat ist.

6. Schlauch nach einem der Ansprüche 1 bis 5, wobei der Schlauch (1) zumindest eine Barriereschicht (7) - vorzugsweise aus Polyvinylchlorid - aufweist, die bevorzugt zwischen der Innenschicht (4) und der Außenschicht (6), besonders bevorzugt zwischen der Innenschicht (4) und der Gewebeschicht (5), angeordnet ist und die ganz besonders bevorzugt nach außen hin an die Innenschicht (4) anschließt.

7. Schlauch nach Anspruch 6, wobei die Barriereschicht (7) zumindest ein Barriereadditiv aufweist, das insbesondere als Barriere gegen Sonneneinstrahlung wirkt und wobei das Barriereadditiv vorzugsweise ein färbendes, bevorzugt ein schwarz färbendes, Barriereadditiv ist.

8. Schlauch nach einem der Ansprüche 1 bis 7, wobei der Schlauch (1) zumindest eine Verstärkungsschicht (8) - vorzugsweise aus Polyvinylchlorid - aufweist, die bevorzugt zwischen der Innenschicht (4) und der Außenschicht (6), besonders bevorzugt zwischen der Innenschicht (4) und der Gewebeschicht (5), angeordnet ist und die ganz besonders bevorzugt nach innen hin an die Gewebeschicht (5) und/oder nach außen hin an die Barriereschicht (7) anschließt.

9. Schlauch nach einem der Ansprüche 6 bis 8, wobei das Polyvinylchlorid der Barriereschicht (7) und/oder das Polyvinylchlorid der Verstärkungsschicht (8) zumindest einen Weichmacher auf Pflanzenbasis aufweist und wobei bevorzugt alle Polyvinylchlorid-basierten Schichten bzw. Polyvinylchlorid-Schichten des Schlauches (1) zumindest einen Weichmacher auf Pflanzenbasis aufweisen.

10. Schlauch nach einem der Ansprüche 1 bis 9, wobei das Polyvinylchlorid der Innenschicht (4) und/oder das Polyvinylchlorid der Außenschicht (6) und/oder das Polyvinylchlorid der Barriereschicht (7) und/oder das Polyvinylchlorid der Verstärkungsschicht (8) zumindest teilweise, vorzugsweise vollständig bzw. im Wesentlichen vollständig, aus pflanzlichen bzw. nachwachsenden Rohstoffen, insbesondere unter Einsatz von Tallöl und/oder Palmöl, erzeugt ist.

11. Schlauch nach einem der Ansprüche 1 bis 10, wobei die zumindest eine Gewebeschicht (5) um die nach innen hin an die Gewebeschicht (5) anschließende Schicht, vorzugsweise um die Innenschicht (4) und/oder um die Barriereschicht (7) und/oder um die Verstärkungsschicht (8), herum angeordnet ist, bevorzugt gewickelt ist, wobei die Gewebeschicht (5) besonders bevorzugt als nicht-verknüpfte Gewebeschicht, insbesondere als Kreuzgewebe, und/oder als verknüpfte Gewebeschicht ausgebildet ist.

12. Schlauch nach einem der Ansprüche 1 bis 11, wobei die Außenschicht (6) zumindest bereichsweise bzw. abschnittsweise transparent ausgebildet ist, sodass die zumindest eine Gewebeschicht (5) bevorzugt durch die transparenten Bereiche bzw. Abschnitte der Außenschicht (6) hindurch sichtbar ist.

13. Schlauch nach einem der Ansprüche 1 bis 12, wobei die Gesamtschichtdicke (d) der Schlauchwandung (3) des Schlauches (1) 1,0 mm bis 6,0 mm, bevorzugt 1,5 mm bis 5,5 mm, besonders bevorzugt 1,8 mm bis 4,5 mm und ganz besonders bevorzugt 2,0 mm bis 4,0 mm, beträgt.

14. Schlauch nach einem der Ansprüche 1 bis 13, wobei die nach innen hin an die Gewebeschicht (5) anschließenden Schichten des Schlauches (1) zusammen eine größere Schichtdicke aufweisen als die nach außen hin an die Gewebeschicht (5) anschließenden Schichten und wobei das Verhältnis der Schichtdickensumme der nach innen hin an die Gewebeschicht (5) anschließenden Schichten zu der Schichtdickensumme der nach außen hin an die Gewebeschicht (5) anschließenden Schichten vorzugsweise 80:20 bis 51:49, bevorzugt 75:25 bis 55:45, besonders bevorzugt 70:30 bis 60:40, beträgt.

15. Schlauch nach einem der Ansprüche 6 bis 14, wobei die Innenschicht (4) und/oder die Außenschicht (6) und/oder die Verstärkungsschicht (8) jeweils eine größere Schichtdicke aufweist/aufweisen als die Barriereschicht (7).

16. Schlauch nach einem der Ansprüche 1 bis 15, wobei die Innenschicht (4) und/oder die Außenschicht (5) und/oder die Barriereschicht (7) und/oder die Verstärkungsschicht (8) jeweils einen Anteil des zumindest einen Weichmachers auf Pflanzenbasis von 10 Gew.-% bis 50 Gew.-%, vorzugsweise von 15 Gew.-% bis 45 Gew.-%, bevorzugt von 20 Gew.-% bis 40 Gew.-%, aufweisen.

## Geänderte Patentansprüche

### Geänderte Patentansprüche gemäss Regel 137(2) EPÜ.

1. Mehrschichtiger flexibler Schlauch (1), insbesondere Wasserschlauch, zur Durchleitung zumindest eines fluiden Mediums, insbesondere zur Durchleitung von Wasser, wobei der Schlauch (1) einen Fluidkanal (2) und eine den Fluidkanal (2) umgebende Schlauchwandung (3) aufweist, wobei die Schlauchwandung (3) mehrschichtig aufgebaut ist und zumindest drei Schichten mit folgendem Schichtaufbau von innen nach außen aufweist:
- Innenschicht (4) aus Polyvinylchlorid
- Gewebeschicht (5)
- Außenschicht (6) aus Polyvinylchlorid,
wobei das Polyvinylchlorid der Innenschicht (4) und das Polyvinylchlorid der Außenschicht (5) zumindest einen Weichmacher auf Pflanzenbasis aufweist, wobei die Innenschicht (4) und die Außenschicht (5) aus dem zumindest einen Weichmacher auf Pflanzenbasis aufweisenden Polyvinylchlorid bestehen bzw. im Wesentlichen bestehen,
wobei der Schlauch (1) zumindest eine Verstärkungsschicht (8) aus Polyvinylchlorid aufweist, die zwischen der Innenschicht (4) und der Außenschicht (6) angeordnet ist, wobei das Polyvinylchlorid der Verstärkungsschicht (8) zumindest einen Weichmacher auf Pflanzenbasis aufweist,
wobei die Innenschicht (4) und die Außenschicht (6) und die Verstärkungsschicht (8) jeweils einen Anteil des zumindest einen Weichmachers auf Pflanzenbasis von 10 Gew.-% bis 50 Gew.-% aufweisen.

2. Schlauch nach Anspruch 1, wobei der zumindest eine Weichmacher auf Pflanzenbasis zumindest ein pflanzlicher Ester, vorzugsweise ein Gemisch aus pflanzlichen Estern, ist und bevorzugt zumindest ein Pflanzenöl, besonders bevorzugt ein Pflanzenölgemisch, ist.

3. Schlauch nach einem der Ansprüche 1 oder 2, wobei das Polyvinylchlorid der Innenschicht (4) und/oder das Polyvinylchlorid der Außenschicht (6) aus fossilen und/oder aus pflanzlichen bzw. nachwachsenden Rohstoffen erzeugt ist und insbesondere ohne den Einsatz tierischer Rohstoffe und/oder tierischer Zusatzstoffe erzeugt ist.

4. Schlauch nach einem der Ansprüche 1 bis 3, wobei die zumindest eine Gewebeschicht (5) auf Basis zumindest eines Polyesters, vorzugsweise auf Basis von Polyethylenterephthalat, hergestellt ist und bevorzugt aus zumindest einem Polyester, besonders bevorzugt aus Polyethylenterephthalat, besteht bzw. im Wesentlichen besteht.

5. Schlauch nach Anspruch 4, wobei der zumindest eine Polyester der zumindest einen Gewebeschicht (5) ein Polyester-Rezyklat ist und vorzugsweise ein Polyethylenterephthalat-Rezyklat ist.

6. Schlauch nach einem der Ansprüche 1 bis 5, wobei der Schlauch (1) zumindest eine Barriereschicht (7) - vorzugsweise aus Polyvinylchlorid - aufweist, die bevorzugt zwischen der Innenschicht (4) und der Außenschicht (6), besonders bevorzugt zwischen der Innenschicht (4) und der Gewebeschicht (5), angeordnet ist und die ganz besonders bevorzugt nach außen hin an die Innenschicht (4) anschließt.

7. Schlauch nach Anspruch 6, wobei die Barriereschicht (7) zumindest ein Barriereadditiv aufweist, das insbesondere als Barriere gegen Sonneneinstrahlung wirkt und wobei das Barriereadditiv vorzugsweise ein färbendes, bevorzugt ein schwarz färbendes, Barriereadditiv ist.

8. Schlauch nach einem der Ansprüche 1 bis 7, wobei die zumindest eine Verstärkungsschicht (8) zwischen der Innenschicht (4) und der Gewebeschicht (5), angeordnet ist und ganz besonders bevorzugt nach innen hin an die Gewebeschicht (5) und/oder nach außen hin an die Barriereschicht (7) anschließt.

9. Schlauch nach einem der Ansprüche 6 bis 8, wobei das Polyvinylchlorid der Barriereschicht (7) zumindest einen Weichmacher auf Pflanzenbasis aufweist und wobei bevorzugt alle Polyvinylchlorid-basierten Schichten bzw. Polyvinylchlorid-Schichten des Schlauches (1) zumindest einen Weichmacher auf Pflanzenbasis aufweisen.

10. Schlauch nach einem der Ansprüche 1 bis 9, wobei das Polyvinylchlorid der Innenschicht (4) und/oder das Polyvinylchlorid der Außenschicht (6) und/oder das Polyvinylchlorid der Barriereschicht (7) und/oder das Polyvinylchlorid der Verstärkungsschicht (8) zumindest teilweise, vorzugsweise vollständig bzw. im Wesentlichen vollständig, aus pflanzlichen bzw. nachwachsenden Rohstoffen, insbesondere unter Einsatz von Tallöl und/oder Palmöl, erzeugt ist.

11. Schlauch nach einem der Ansprüche 1 bis 10, wobei die zumindest eine Gewebeschicht (5) um die nach innen hin an die Gewebeschicht (5) anschließende Schicht, vorzugsweise um die Innenschicht (4) und/oder um die Barriereschicht (7) und/oder um die Verstärkungsschicht (8), herum angeordnet ist, bevorzugt gewickelt ist, wobei die Gewebeschicht (5) besonders bevorzugt als nicht-verknüpfte Gewebeschicht, insbesondere als Kreuzgewebe, und/oder als verknüpfte Gewebeschicht ausgebildet ist.

12. Schlauch nach einem der Ansprüche 1 bis 11, wobei die Außenschicht (6) zumindest bereichsweise bzw. abschnittsweise transparent ausgebildet ist, sodass die zumindest eine Gewebeschicht (5) bevorzugt durch die transparenten Bereiche bzw. Abschnitte der Außenschicht (6) hindurch sichtbar ist.

13. Schlauch nach einem der Ansprüche 1 bis 12, wobei die Gesamtschichtdicke (d) der Schlauchwandung (3) des Schlauches (1) 1,0 mm bis 6,0 mm, bevorzugt 1,5 mm bis 5,5 mm, besonders bevorzugt 1,8 mm bis 4,5 mm und ganz besonders bevorzugt 2,0 mm bis 4,0 mm, beträgt.

14. Schlauch nach einem der Ansprüche 1 bis 13, wobei die nach innen hin an die Gewebeschicht (5) anschließenden Schichten des Schlauches (1) zusammen eine größere Schichtdicke aufweisen als die nach außen hin an die Gewebeschicht (5) anschließenden Schichten und wobei das Verhältnis der Schichtdickensumme der nach innen hin an die Gewebeschicht (5) anschließenden Schichten zu der Schichtdickensumme der nach außen hin an die Gewebeschicht (5) anschließenden Schichten vorzugsweise 80:20 bis 51:49, bevorzugt 75:25 bis 55:45, besonders bevorzugt 70:30 bis 60:40, beträgt.

15. Schlauch nach einem der Ansprüche 6 bis 14, wobei die Innenschicht (4) und/oder die Außenschicht (6) und/oder die Verstärkungsschicht (8) jeweils eine größere Schichtdicke aufweist/aufweisen als die Barriereschicht (7).
